# EUROPÄISCHE PATENTSCHRIFT

(11) **EP 0 551 551 B1**
(45) Veröffentlichungstag und Bekanntmachung des Hinweises auf die Patenterteilung: **26.04.1995**
(21) Anmeldenummer: 92100757.1
(22) Anmeldetag: 17.01.1992
(51) Int. Cl.: H02K 13/00, H01R 39/14, H02K 15/16

(54) **Kommutatormotor, insbesondere für einen Kraftfahrzeug-Hilfsantrieb**
Commutator motor, in particular for the auxiliary drive of motor vehicles
Moteur à collecteur, en particulier pour un entraînement auxiliaire de véhicules automobiles

(43) Veröffentlichungstag der Anmeldung: 21.07.1993
(73) Patentinhaber: SIEMENS AKTIENGESELLSCHAFT, 80333 München (DE)
(72) Erfinder: Kirchner, Albert, Dipl.-Ing., W-8720 Schweinfurt (DE); Rüb, Michael, Dipl.-Ing. (FH), W-8700 Würzburg (DE)

(56) Entgegenhaltungen:
- EP-A- 0 213 427
- WO-A-81/01083
- DE-A- 3 133 135
- DE-U- 8 625 147
- GB-A- 354 212
- GB-A- 1 513 502

## Beschreibung

Die Erfindung bezieht sich auf einen Kommutatormotor, insbesondere für einen Kraftfahrzeug-Hilfsantrieb, gemäß Patentanspruch 1.

Durch die EP-B1-0 065 585 bzw. die EP-B1-0 213 427 sind Kommutatormotoren bekannt, die z.B. als permanenterregte Gleichstrommotoren für Ventilatorantriebe in Kraftfahrzeugen eingesetzt werden; bei Anordnung mit zumindest teilweise vertikal stehender Rotorwelle stützt sich das Gewicht des Rotors über den Kommutator und eine nachgeordnete Anlaufscheibe auf einem statorseitig gehaltenen Lager ab. Der Kommutator ist üblicherweise im Preßsitz auf der Rotorwelle gehalten und muß die gesamten gewichts- bzw. betriebsmäßigen Stoßbelastungen ohne Veränderung seiner Lage relativ zur Rotorwelle aufnehmen. Um dies bei stärkeren Belastungen gewährleisten zu können, sind oftmals zusätzliche Maßnahmen zur axialen Sicherung des Kommutatorsitzes auf der Rotorwelle notwendig, die als in die Welle eingeformte Anlageschultern oder durch in Welleneinstiche eingeschnappte Wellensicherungsringe erfolgen kann. Diese Maßnahmen erfordern zusätzlich Konstruktions- und Montageschritte und erschweren eine die beim Zusammenbau des Motors sich ergebenden Toleranzen berücksichtigende Justierung des Kommutatorsitzes im gewünschten Abstand, z.B. zum aufnehmenden Lager bzw. zu dem die Rotorwicklung aufnehmenden Rotorblechpaket.

Eine demgegenüber mit wesentlich geringerem Konstruktions- und Montageaufwand mögliche Abstützung bei gleichzeitiger einfacher Justierbarkeit und Entlastung der Preßsitzhalterung des Kommutators auf der Rotorwelle ist erfindungsgemäß durch eine axiale Abstützhülse zwischen dem Kommutator und dem Rotorblechpaket möglich, die mit ihrem einen axialen Ende, z.B. als Anlagebund mittel- bzw. unmittelbar an dem Kommutator anliegt und mit ihrem anderen axialen Ende, insbesondere in Form einer Hülse, in einen Wellenbund einer stirnseitig des Rotorblechpaket abdeckenden Isolierendscheibe eintauchbar und relativ zu dieser in ihrer Betriebs-Abstützlage fixierbar ist. Durch diese Konstruktion werden die axialen Gewichts- und Stoßbelastungen des Rotors nicht über die Rotorwelle sondern direkt axial über die Abstützhülse und den Kommutator sowie die ggf. nachgeordnete Anlaufscheibe auf das Lager ohne Beanspruchung der Preßsitzhalterung zwischen der Innenumfangsfläche des Kommutators und der Außenumfangsfläche der Rotorwelle übertragen, so daß in vorteilhafter Weise der auf seinem äußeren Umfang die Kommutatorlamellen aufnehmende Kunststoff- bzw. Gießharz-Tragring des Kommutators geringeren Preßsitzbeanspruchen ausgesetzt ist und aufgrund dieser reduzierten Belastung ohne Asbestbeimischung ausgeführt werden kann.

Zur weiteren Montagevereinfachung ist nach einer Ausgestaltung der Erfindung vorgesehen, die Abstützhülse als Vormontageteil bereits in dem Wellenbund der Isolierendscheibe vorgefügt mit dem notwendigen axialen Überstand ihres Bundes zu halten. Zweckmäßigerweise ist dazu ein Preß-Schiebesitz zwischen dem Außenumfang des in den Wellenbund eintauchenden Teils der Abstützhülse und dem Innenumfang der Wellenbohrung des Wellenbundes der Isolierendscheibe vorgesehen. Als zusätzliche Fixierungshilfe zwischen der Abstützhülse einerseits und dem Wellenbund der Isolierendscheibe andererseits nach Erreichen der Betriebs-Abstützlage der Abstützhülse ist das Auftragen eines diffusionsklebefähigen Lösungsmittels, insbesondere einer Resorcin-Lösung, auf die gegenseitigen Gleitflächen von Abstützhülse bzw. Wellenbund vorgesehen; das Lösungsmittel ist zunächst beim Eindrücken der Abstützhülse über den auf die Welle aufgeschobenen Kommutator als Gleithilfe wirksam und dient anschließend zur gegenseitigen Verschweißung bzw. Verkleben der zuvor angelösten gegenseitigen Gleitflächen. Das Anlösen sowie das Gleiten und anschließend das gegenseitige Verschweißen kann durch eine Wärmebehandlung weiter optimiert werden.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:
- FIG 1: einen axialen Längsschnitt durch einen dauermagneterregten Kommutatormotor mit vertikal stehender Rotorwelle;
- FIG 2: einen vergrößerten Detailausschnitt aus FIG 1 im Bereich der in der Isolierendscheibe fixierten Abstützhülse in ihrer Betriebs-Abstützlage.

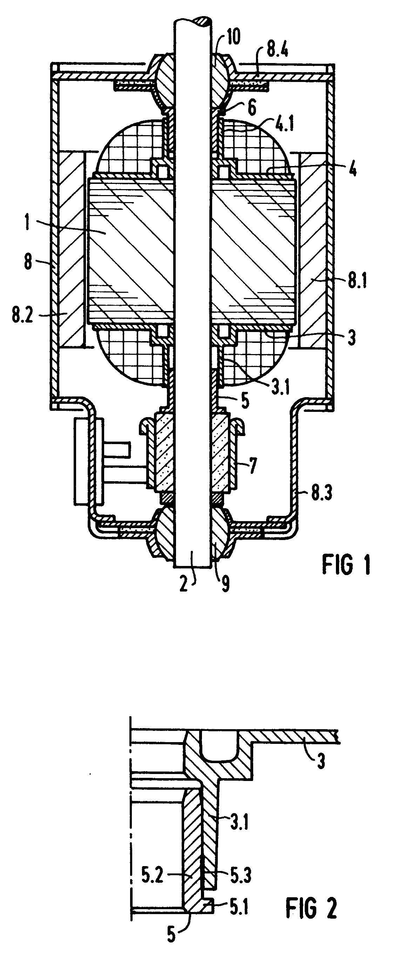

FIG 1 zeigt einen dauermagneterregten Kommutatormotor in einer Betriebslage mit vertikal stehender Welle. An der Innenumfangsfläche eines Statorgehäuses 8 sind das Magnetfeld erzeugende teilschalenförmige Dauermagnete 8.1 bzw. 8.2 angeordnet. An den stirnseitigen Enden des Statorgehäuses 8 sind je ein Lagerbügel 8.3 bzw.8.4 befestigt. Die Lagerbügel 8.3 bzw.8.4 nehmen jeweils ein Kalottenlager 9 bzw.10 auf. In den Kalottenlagern 9 bzw.10 ist eine Rotorwelle 2 drehbar gelagert, auf der ein bewickeltes Rotorblechpaket 1 sowie ein Kommutator 7 im Preßsitz gehaltert sind. Die untere Stirnseite des Kommutators 7 stützt sich unter Zwischenlage einer Anlaufscheibe auf dem unteren Kalottenlager 9 axial ab.

Zur axialen Abstützung zwischen dem die Rotorwicklung aufnehmenden Rotorblechpaket 1 und dem Kommutator 7 ist erfindungsgemäß eine Abstützhülse 5 vorgesehen, die bei fertig montiertem Kommutatormotor mit einem unteren Bund 5.1 an der oberen Stirnseite des Kommutators 7 anliegt und mit einer Hülse 5.2 in eine Wellenbohrung eines Wellenbundes 3.1 einer Isolierendscheibe 3 zwischen der unteren anliegenden Stirnseite des Rotorblechpaketes 1 und dem Wickelkopf der eingebrachten Rotorwicklung hineinragt und relativ zu dieser derart fixierbar ist, daß bei axialen Gewichts- und/oder Stoßbelastungen das Rotorblechpaket 1 sich nicht unter Vermittlung der Rotorwelle 2 über den Kommutator 7 auf dem Kalottenlager 9 abstützt sondern die axialen Belastungskräfte über die Abstützhülse 5 axial direkt auf den Kommutator übertragen werden. Dadurch ist in vorteilhafter Weise die Preßsitzhalterung sowohl zwischen dem Rotorblechpaket 1 und der Rotorwelle 2 als auch zwischen dem Kommutator 7 und der Rotorwelle 2 von einer axialen Gewichts-und/oder Stoßbelastungsübertragung entlastet; auf eine Asbestbeimischung zur Festigkeitserhöhung des Kunststoff- bzw. Kunstharztragrings für die Lamellen des Komutators kann damit in vorteilhafter Weise verzichtet werden.

Zur zusätzlichen Fixierungshilfe zwischen dem Wellenbund 3.1 der Isolierendscheibe 3 und der Abstandshülse 5 ist - wie insbesondere aus FIG 2 ersichtlich - eine Verklebung bzw. Verschweißung zwischen dem Außenumfang der Hülse 5.2 der Abstandshülse 5 und der Innenumfangsfläche des Wellenbundes 3.1 der Isolierendscheibe 3 mittels eines diffusionsklebefähigen Lösungsmittels 5.3 in vorteilhafter Weise derart vorgesehen, daß vor dem endgültigen Eindrücken der Abstandshülse 5 in ihre Betriebs-Abstützlage relativ zum Wellenbund 3.1 auf die in diesen Wellenbund eintretende Anlagefläche das Lösungsmittel 5.3 aufgebracht wird und somit zunächst als Gleitmittel zur einfacheren Eindrückung der Abstützhülse 5 dient und anschließend nach Erreichen der Betriebs-Abstützlage durch Anlösen der in vorteilhafter Weise aus Kunststoff, insbesondere Polyamid, gefertigten Abstandshülse 5 einerseits und Isolierendscheibe 3 andererseits die beiden Bauteile miteinander verklebt bzw. verschweißt werden können. Dieser Verschweißvorgang kann nach einer Ausgestaltung der Erfindung durch eine Wärmebehandlung zusätzlich verstärkt bzw. beschleunigt werden. Als diffusionsklebefähiges Gleit- bzw. Lösungsmittel 5.3 zum Anlösen der gegenseitig gleitenden und anschließend miteinander zu verklebenden bzw. verschweißenden Gleitflächen ist nach einer Ausgestaltung der Erfindung eine Resorcin-Lösung vorgesehen.

In zweckmäßiger Weise wird die im Preß-Schiebesitz relativ zum Wellenbund 3.1 der Isolierendscheibe 3 gehaltene Abstandshülse 5 bereits als einstückiges Vormontageteil in den Wellenbund 3.1 derart vorgefügt eingesteckt, daß ihr freies, aus dem Wellenbund 3.1 herausragendes Ende länger ist als ihr freier herausragender Abstand in der Betriebsabstützlage nach dem Aufziehen des Kommutators 7 auf die bereits zuvor mit dem noch unbewickelten Rotorblechpaket 1 versehene Rotorwelle 2. Beim Aufziehen des Kommutators 7 vom unteren Ende der Rotorwelle 2 her wird dann die Abstützhülse 5 nach dem Anschlagen ihres Bundes 5.1 an die obere Stirnseite des Kommutators soweit in den Wellenbund 3.1 der sie zuvor vorgefügt haltenden Isolierendseite 3 eingedrückt, bis der Kommutator 7 seinen betriebsmäßigen Sitz auf der Rotorwelle 2 und damit gleichzeitig die Abstützhülse 5 ihre Betriebs-Abstützlage im Wellenbund 3.1 erreicht haben. Die Betriebs-Abstützlage der Abstützhülse 5 ist dann durch den Preßsitz zum Wellenbund 3.1 und ggf. durch verstärkte Fixierung aufgrund eines Verklebens bzw. Verschweißens mit dem Wellenbund 3.1 lagegesichert.

Nach dem Bewickeln des Rotorblechpaketes 1 wird dann der derart vormontierte und bewickelte Rotor in senkrechter Aufbaumontage in das mit dem unteren Lagerbügel 8.3 und dem unteren Kalottenlager 9 bestückte Motorgehäuse 8 derart eingebracht, daß der Kommutator 7 mit seiner unteren Stirnseite unter Zwischenlage einer Anlaufscheibe auf dem unteren Kalottenlager 9 aufliegt. Anschließend wird der obere Lagerbügel 8.4 mit dem oberen Kalottenlager 10 montiert, wobei in an sich durch die EP-B1-0 213 427 bekannter Weise eine in einem Wellenbund 41 einer oberen Isolierendscheibe 4 vorgefügt gehalterte Distanzhülse 6 zur Gewährleistung eines gewünschten Axialspiels eingedrückt und fixiert wird.

## Patentansprüche

1. Kommutatormotor, insbesondere für einen Kraftfahrzeug-Hilfsantrieb, mit in axialer Betriebslage über den auf seiner dementsprechend betriebsmaßig vertikalen Rotorwelle (2) gehalterten Kommutator (7) auf einem statorseitigen Lager (9) abstützbarem Rotor (1,2) und mit einer axialen Abstützhülse (5) zwischen dem Kommutator (7) und dem Rotorblechpaket (1), die mit ihrem einen axialen Ende (Bund 5.1) mittel- bzw. unmittelbar an dem Kommutator (7) anliegt und mit ihrem anderen axialen Ende (Hülse 5.2) in einen Wellenbund (3.1) einer stirnseitig das Rotorblechpaket (1) abdeckenden Isolierendscheibe (3) eintauchbar und relativ zu dieser in ihrer Betriebs-Abstützlage fixierbar ist.

2. Kommutatormotor nach Anspruch 1, mit einer als Vormontageteil bereits in den Wellenbund (3.1) vorgefügt gehaltenen Abstützhülse (5).

3. Kommutatormotor nach Anspruch 1 oder 2, mit einer aus Kunststoff gefertigten, insbesondere gespritzten Isolierendscheibe (3) und/oder Abstützhülse (5).

4. Kommutatormotor nach Anspruch 3, mit einer Isolierendscheibe (3) bzw. einer Abstützhülse (5) aus Polyamid.

5. Kommutatormotor nach Anspruch 3 oder 4, mit einer relativ zur Isolierendscheibe (3) zumindest teilweise durch Auftragen eines diffusionsklebefähigen Lösungsmittels (5.3) auf die gegenseitigen Gleitflächen gleitfähigen und in ihrer Betriebs-Abstützlage fixierbaren Abstützhülse (5).

6. Kommutatormotor nach Anspruch 5, mit einer Resorcin-Lösung als diffusionsklebefähigem Lösungsmittel (5.3).

7. Kommutatormotor nach einem der Ansprüche 4-6, mit einer durch Wärmebehandlung verstärkten Fixierung der Abstützhülse (5) in ihrer Betriebs-Abstützlage.

8. Kommutatormotor nach einem der Ansprüche 1-7, mit einer in einen Wellenbund (4.1) einer an der dem Kommutator (7) abgewandten Stirnseite des Rotorblechpaketes (1) anliegenden weiteren Isolierendscheibe (4) eintauchenden, nach Einstellung eines Axialspiels in der Betriebs-Axialspiellage fixierbaren Verschiebehülse (6).

9. Kommutatormotor nach einem der Ansprüche 1-8, mit jeweils relativ zur Isolierendscheibe (3 bzw.4) im Preß-Schiebesitz gehaltenen Abstützhülse (5) bzw. Verschiebehülse (6).

10. Kommutatormotor nach einem der Ansprüche 1-9, mit einem asbestbeimischungsfreien Kommutatorring für die Kommutatorlamellen.

## Claims

1. Commutator motor, preferably for the auxiliary drive of a motor vehicle, with a rotor (1, 2) which can be supported in the axial operating position on a stator-side bearing (9) via the commutator (7), held on its rotor shaft (2) which accordingly in operation is vertical, and with an axial supporting sleeve (5) between the commutator (7) and the laminated rotor core (1), which supporting sleeve bears with its one axial end (collar 5.1) indirectly or directly on the commutator (7) and with its other axial end (sleeve 5.2) can be inserted into a shaft collar (3.1) of an insulating end disc (3), which covers the laminated rotor core (1) at the end face, and can be fixed in its operating position of support relative to this insulating end disc.

2. Commutator motor according to Claim 1, with a supporting sleeve (5) which is already held as a prefitted part in the shaft collar (3.1).

3. Commutator motor according to Claim 1 or 2, with an insulating end disc (3) and/or supporting sleeve (5) manufactured, preferably moulded, from plastic.

4. Commutator motor according to Claim 3, with an insulating end disc (3) or a supporting sleeve (5) made of polyamide.

5. Commutator motor according to Claim 3 or 4, with a supporting sleeve (5) which is slidable relative to the insulating end disc (3) at least partly due to the application of a diffusion-bondable solvent (5.3) to the mutual sliding faces, and which can be fixed in its operating position of support.

6. Commutator motor according to Claim 5, with a resorcinol solution as diffusion-bondable solvent (5.3).

7. Commutator motor according to one of Claims 4-6, with fixing of the supporting sleeve (5) in its operating position of support being reinforced by heat treatment.

8. Commutator motor according to one of Claims 1-7, with a sliding sleeve (6) which is inserted into a shaft collar (4.1) of a further insulating end disc (4), which bears on that end of the laminated rotor core (1) which is remote from the commutator (7) and which can be fixed in the operating position in which there is axial play after axial play has been set.

9. Commutator motor according to one of Claims 1-8, with the supporting sleeve (5) or sliding sleeve (6) respectively held in push-in sliding fit relative to the insulating end disc (3 or 4).

10. Commutator motor according to one of Claims 1-9, with a commutator ring which is free from contamination by asbestos for the commutator laminates.

## Revendications

1. Moteur à collecteur, notamment pour un dispositif d'entraînement auxiliaire d'un véhicule automobile, comportant un rotor (1,2) pouvant prendre appui dans une position axiale de fonctionnement sur un palier (9) situé sur le stator, par l'intermédiaire du collecteur (7) retenu sur l'arbre (2) du rotor, qui est par conséquent vertical en fonctionnement, et comportant une douille axiale de support (5) disposée entre le collecteur (7) et le paquet de tôles rotoriques (1) et qui s'applique, par l'une de ses extrémités axiales (collet 5.1) directement ou indirectement sur le collecteur (6) et peut pénétrer, par son autre extrémité axiale (douille 5.2), dans un collet d'arbre (3.1) d'une rondelle isolante (3) recouvrant frontalement le paquet de tôles statoriques (1) et peut être fixé par rapport à cette rondelle, dans sa position de support en fonctionnement.

2. Moteur à collecteur suivant la revendication 1, comportant une douille de support (5) retenue déjà à l'état préassemblé, en tant que partie préalablement montée, dans le collet d'arbre (3.1).

3. Moteur à collecteur suivant la revendication 1 ou 2, comportant une rondelle isolante (3) et/ou une douille de support (5), réalisée en matière plastique, et notamment moulée par injection.

4. Moteur à collecteur suivant la revendication 3, comportant une rondelle isolante (3) ou une douille de support (5) en polyamide.

5. Moteur à collecteur suivant la revendication 3 ou 4, comportant une douille de support (5) apte à glisser par rapport à la rondelle isolante (3) au moins partiellement grâce au dépôt d'un solvant (5.3), qui adhère par diffusion, sur la surface de glissement opposée, et qui peut être fixée dans sa position d'appui en fonctionnement.

6. Moteur à collecteur suivant la revendication 5, dans lequel on utilise une solution de résorcine en tant que solvant (5.3) qui adhère par diffusion.

7. Moteur à collecteur suivant l'une des revendications 4-6, dans laquelle la fixation de la douille de support (5) dans sa position de support en fonctionnement, est renforcée sous l'effet d'un traitement thermique.

8. Moteur à collecteur suivant l'une des revendications 1-7, comportant une douille translatable (6), qui pénètre dans un collet d'arbre (4.1) d'une autre rondelle isolante (4) appliquée contre la face frontale, tournée à l'opposé du collecteur (7), du paquet de tôles rotoriques (1) et qui peut être fixée dans la position de jeu axial de service, après réglage d'un jeu axial.

9. Moteur à collecteur suivant l'une des revendications 1-8, comportant une douille d'appui (5) ou une douille translatable (6) maintenue selon un ajustement serré respectivement par rapport à la rondelle isolante (3 ou 4).

10. Moteur à collecteur suivant la revendication 1-9, comportant une bague de collecteur ne contenant aucun mélange d'amiante, pour les lamelles du collecteur.
